# EUROPEAN PATENT SPECIFICATION

(11) **EP 1 215 238 B1**
(45) Date of publication and mention of the grant of the patent: **06.07.2005**
(21) Application number: 01310365.0
(22) Date of filing: 12.12.2001
(51) Int. Cl.: C08L 23/10, C08K 3/00, H01B 3/44

(54) **Fire resistant resin composition and electrical wire having a covering formed of the composition**
Flammhemmende Zusammensetzung und daraus gebildete Kabelisolierung
Matière à mouler thermoplastique résistant à l'inflammation pour l'isolation de câbles

(30) Priority: 12.12.2000 JP 2000377498; 26.03.2001 JP 2001087907; 26.03.2001 JP 2001087908
(43) Date of publication of application: 19.06.2002
(73) Proprietor: Sumitomo Wiring Systems, Ltd., Yokkaichi-City, Mie, 510-8503 (JP); Sumitomo Electric Industries, Ltd., Osaka (JP)
(72) Inventor: Hase, Tatsuya, c/o Sumitomo Wiring Systems, Ltd., Yokkaichi-city, Mie 510-8503 (JP); Sugita, Takahiko, c/o Sumitomo Wiring Systems, Ltd, Yokkaichi-city, Mie 510-8503 (JP); Fujimoto, Hiroshi, c/o Sumitomo Wiring Systems,, Yokkaichi-city, Mie 510-8503 (JP); Sato, Masashi, c/o Sumitomo Wiring Systems, Ltd., Yokkaichi-city, Mie 510-8503 (JP); Matsumoto, Shinichi, c/o Sumitomo Wiring Systems, Yokkaichi-city, Mie 510-8503 (JP)
(74) Representative: Paget, Hugh Charles Edward

(56) References cited:
- EP-A- 0 273 516
- DATABASE WPI Derwent Publications Ltd., London, GB; AN 1994-222126 XP002193574 & JP 06 157842 A (ASAHI), 7 June 1994 (1994-06-07)

## Description

### BACKGROUND OF THE INVENTION

### Field of the Invention

The present invention relates to a fire resistant or non-flammable resin composition, a method of making such a composition and a coated electrical wire having a covering of the composition on an electrical conductor, made of the composition. More particularly, the present invention relates to a fire resistant resin composition suitable as a covering material for a conductor such as an electrical wire to be used in component parts of a vehicle and electrical/electronic equipment.

### Description of the Related Art

As a coating material for an electrical wire to be used in a vehicle or in electrical/electronic equipment, polyvinyl chloride which is superior in non-flammability is conventionally used. To obtain required characteristics such as mechanical properties including wear resistance and tensile strength, and in addition flexibility and processability, additives such as a plasticizer or a stabilizer are appropriately added to the polyvinyl chloride in varying amounts.

Polyvinyl chloride has low flammability. On the other hand, it contains halogen, so that when the vehicle is burnt or the electrical/electronic equipment is burnt when discarded, the polyvinyl chloride releases a harmful halogen gas to the atmosphere and thus causes environmental pollution.

In recent years, fire resistant resin compositions not containing halogen have been researched. For example, a non-halogen resin composition disclosed in JP-A-5-301996 contains a mixture of polyolefin and high-density polyethylene and a metal hydroxide added to the mixture as a fire resistant agent.

Another non-halogen fire resistant resin composition disclosed in JP-B-7-110912 contains a mixture of a thermoplastic elastomer and polyolefin having a low crystallisability and an inorganic fire resistant agent added to the mixture.

An electrical wire disclosed in JP-B-7-78518 has a conductor covered with a cross-linked resin composition containing a mixture of polyolefin having a melting point of not less than 120°C and a carboxylic acid-modified polymer and surface-treated magnesium hydroxide added to the mixture.

However, in the case of the composition JP-A-5-301996, it is necessary to add a large amount of the metal hydroxide to the mixture of the polyolefin and the high-density polyethylene to achieve fire resistance to a sufficient extent that the composition is self-extinguishing. The composition therefore has very low mechanical strength such as wear resistance and tensile strength. It is possible to increase the content of the high-density polyethylene which is crystallisable and is comparatively high in hardness to improve the mechanical characteristics of the composition, but in this case, the composition has a small amount of non-crystalline material, and only a small amount of the fire resistant agent can be added to the mixture. Consequently, the composition has deteriorated fire resistance and flexibility. Further, when the composition is used as a covering material in an electrical wire, it has very poor processability and extrusion moldability. Thus, the composition is not satisfactory in all necessary characteristics.

In the case of the composition JP-B-7-110912, it is also necessary to add a large amount of the inorganic fire resistant agent to the mixture to achieve a self-extinguishing property. Consequently, as with the composition of JP-A-5-301996, the composition has very low mechanical strength such as wear resistance, tensile strength, and the like. Further, the flexibility of the thermoplastic elastomer of the composition deteriorates. If the mixing amount of the polyolefin having a low crystallisability is reduced to improve the mechanical characteristics the composition has a small amount of a non-crystalline material, and only a small amount of a fire resistant agent can be added. Consequently, the composition has a poor fire resistance and is not satisfactory in all necessary characteristics.

In the case of the electrical wire JP-B-7-78518, the resin composition of the covering should be cross-linked. Thus, it is necessary to introduce a cross-linking step in producing the covered electrical wire, increasing the number of manufacturing steps, which leads to increase of the manufacturing cost.

Further non-halogen fire resistant resin compositions disclosed in EP-A-0273516 contain a mixture of a functionalised selectively hydrogenated monoalkenyl arene-conjugated diene block copolymer, a plasticizer, polypropylene and a hydrated inorganic filler. One example contains 14 parts styrene-ethylene/butylene-styrene block copolymer which has been grafted with 1.3 weight % maleic anhydride, 14 parts homopolypropylene, 3.5 parts oil and 66.75 parts alumina trihydrate.

### SUMMARY OF THE INVENTION

Therefore, it is an object of the present invention to provide a fire resistant resin composition of good fire resistance which does not generate halogen gas when burnt and not only has good mechanical characteristics including wear resistance, tensile strength, tensile elongation, and the like, but also good flexibility and processability.

It is another object of the present invention to provide an electrical wire using this fire resistant composition as a covering material therefor.

According to the invention there is provided a fire resistant resin composition containing the synthetic resin components:
(a) 60 - 97 parts by weight of a propylene resin containing propylene as its main monomer component by weight, and
(b) 3 - 40 parts by weight of a styrene-based thermoplastic elastomeric resin modified with an unsaturated carboxylic acid or a derivative thereof,
components (a) and (b) being free of halogen and the total amount of components (a) and (b) being 100 parts by weight and there being no other synthetic resin components included in the composition,
the composition further containing:
(c) 30 - 200 parts by weight of fire resistant metal hydroxide per 100 parts by weight of components (a) and (b).

The invention further consists in a method of making the resin composition by combining and mixing the components (a), (b) and (c). The component (b) should be modified with the unsaturated carboxylic acid or its derivative, before mixing with components (a) and (c).

Because the composition of the present invention does not contain halogen, it does not generate halogen gas when it is burnt. In addition, because it contains 60 to 97 parts by weight of the propylene resin, of the olefin family, having a comparatively high melting point, it is possible to improve the heat resistance of the resin composition without cross-linking the polymer.

Because it contains 3 - 40 parts by weight of the styrene thermoplastic elastomer modified with the unsaturated carboxylic acid or its derivative, the composition is flexible. Further, a strong bonding interface is formed between the polar metal hydroxide serving as the fire resistant agent and the modified styrene thermoplastic elastomer. Therefore, it is possible to improve the mechanical characteristics of the resin composition such as wear resistance, tensile strength, and tensile elongation without damaging its flexibility.

Further, the resin composition is high in processability and moldability because its mechanical characteristics and flexibility balance each other well. In addition, because the resin composition contains 30 to 200 parts by weight of the metal hydroxide, it has a sufficient degree of fire resistance.

It is preferable that the styrene thermoplastic elastomer modified with the unsaturated carboxylic acid or the derivative thereof is maleic anhydride-modified styrene thermoplastic elastomer, and the metal hydroxide is magnesium hydroxide. In this case, the composition can have excellent mechanical characteristics such as wear resistance.

The electrical wire of the present invention has a conductor and the fire resistant resin composition applied to a peripheral surface of the conductor. It is preferable that the covering made of the resin composition has a thickness 0.2mm to 0.3mm, but wire having a less thickness of the covering may be satisfactorily produced in accordance with the invention.

### BRIEF INTRODUCTION OF THE DRAWINGS

Fig. 1 is an electron micrograph of the structure of the resin composition of Example 11, and
Fig. 2 is an electron micrograph of the structure of the resin composition of Comparative Example 10.

### DETAILED DESCRIPTION OF THE PREFERRED EMBODIMENTS

Features of the present invention will now be described in more detail.

The propylene resin of the composition is a polymer containing propylene as its main monomer component (i.e. at least 50% by weight of propylene monomer units), and does not contain halogen in its molecular structure. The structure of the polymer may be any of a homopolymer, a random copolymer, an alternating copolymer, and a block copolymer.

More specifically, as the propylene resin, it is possible to use any of polypropylene, a propylene-ethylene block copolymer containing propylene as its main monomer component (50wt% or more), a propylene-ethylene random copolymer, a propylene-butene random copolymer, and a propylene/ethylene-propylene block copolymer i.e. a block copolymer having segments of propylene/ethylene polymer and segments of polypropylene. It is possible to use a mixture of these polymers.

To improve the processability and extrusion moldability of the propylene resin, it is preferable that the propylene resin has a melt flow rate (hereinafter referred to as MFR) in the range of 0.1 to 5g/10 minutes when it is measured (at a temperature 230°C and a load of 2.16kg) in accordance with JIS K 6758.

The styrene-based thermoplastic elastomer modified with the unsaturated carboxylic acid or its derivative is a copolymer not containing halogen and is preferably a block copolymer consisting of styrene polymer segments serving as hard segments and a rubbery polymer segment serving as soft segments. The thermoplastic elastomer thus has, in its molecular structure, the hard segment which functions in a manner similar to a cross-linking point and the soft segment showing rubber-like elasticity at ambient temperature (25°C). Thus, when the thermoplastic elastomer is heated, it is softened and plastically deformable by an external force (since it is not cross-linked) but it is elastomeric at ambient temperature (e.g. 15 - 25°C).

More specifically, as the hard segment, it is possible to use polystyrene, poly o-methylstyrene, poly m-methylstyrene, poly p-methylstyrene, poly α-methylstyrene, poly β-methylstyrene, polydimethylstyrene, and polytrimethylstyrene. As the soft segment, it is possible to use polybutadiene, an ethylene-propylene copolymer, an ethylene-propylene-diene tri-dimensional copolymer, polyisoprene, and a butadiene-isoprene copolymer. It is possible to use these styrene thermoplastic elastomers singly or by mixing two or more thereof.

As the styrene thermoplastic elastomer, a styrene-butadiene block copolymer, a styrene/ethylene-propylene block copolymer and a styrene/ethylene butadiene block copolymer can be preferably used.

To improve the heat resistance of the resin composition, it is preferable to use a hydrogenated styrene thermoplastic elastomer having double bonds in the molecular chain saturated by hydrogen. More specifically, a hydrogenated styrene-butadiene block copolymer, a hydrogenated styrene/ethylene-propylene block copolymer and a hydrogenated styrene/ethylene-butadiene block copolymer are most favourable.

The styrene thermoplastic elastomer is typically allowed to react with the modifying unsaturated carboxylic acid or its derivative after polymerisation to form the modified styrene thermoplastic elastomer, but the modifier may be included in a monomer used in the polymerisation stage.

As the unsaturated carboxylic acid which is used for the modification, it is possible to use maleic acid, fumaric acid, itaconic acid, acrylic acid, and the like. As a derivative of an unsaturated carboxylic acid, it is possible to use maleic anhydride, monoester maleate, diester maleate, fumaric anhydride, monoester fumarate, diester fumarate, itaconic anhydride, monoester itaconate, diester itaconate, and the like. Of these derivatives, maleic anhydride is most favourable because it improves the mechanical characteristics such as wear resistance of the resin composition.

It is preferable that the modification ratio of the modified styrene thermoplastic elastomer is in the range of 0.1 to 10wt% (weight of modifying unsaturated carboxylic acid or derivative). If the modification ratio is less than 0.1wt%, the chemical bonding strength to the surface of the metal hydroxide decreases, and thus a strong bonding interface cannot be obtained. Thus, the effect to be obtained by the modification is liable to be small. If the modification ratio is more than 10wt%, the various characteristics of the resin composition do not balance well with one another.

As the metal hydroxide, it is possible to use any of magnesium hydroxide, aluminum hydroxide and calcium hydroxide. Magnesium hydroxide is most preferred because its decomposition temperature is as high as about 360°C. It is preferable that the average particle diameter of the metal hydroxide is in the range of 0.1 to 20µm to improve the mechanical characteristic such as wear resistance of the composition.

To enhance the dispersibility of the metal hydroxide into the polymer components and its reactivity with the polymer components, the particles of the metal hydroxide may be surface-treated with a silane coupling agent such as aminosilane, vinylsilane, epoxysilane or methacryloxysilane or with a higher fatty acid (e.g. of 12 or more carbon atoms) such as stearic acid or oleic acid.

Preferably no fibrous filler is present in the composition. Preferably the metal hydroxide or mixture of metal hydroxides is the only filler present.

The components can be combined by mixing and kneading them by conventional methods, which permit adjustment of the mixing ratio. Typically the main components (the two synthetic resins and the metal hydroxide) are mixed and kneaded together in a single step simultaneous mixing procedure. Alternatively a two-step mixing may be used, the modified styrene-based resin being mixed with the metal hydroxide first, and the propylene resin being added later. The styrene-based resin is modified with the unsaturated carboxylic acid or derivative thereof prior to mixing with the other two main components, and is mixed with the metal hydroxide in a state in which the unsaturated carboxylic acid (or derivative) modifying group is unreacted with another compound.

It has been found that the modified styrene-based polymer has high affinity with the hydroxide on account of the carboxylic acid or derivative thereof present. Therefore it is more easily adhered to the hydroxide particles than the propylene polymer. A morphology in which the styrene-based polymer surrounds the hydroxide particles and the propylene polymer fills up the space between the coated hydroxide particles, namely a so-called spotted or island structure in which the propylene polymer is the "continuous phase" or matrix and the coated hydroxide particles are the "discontinuous phase" is formed. This morphology can be demonstrated by the electron microscope picture of the resin composition produced in an Example described later.

If the mixing ratio of the propylene resin is less than 60 parts by weight, the wear resistance of the composition tends to be low. If the mixing ratio of the propylene resin is more than 97 parts by weight, the flexibility and processability of the composition tend to be low. If the mixing ratio of the modified styrene thermoplastic elastomer is less than three parts by weight, the flexibility and processability of the composition tend to be low. If the mixing ratio of the modified styrene thermoplastic elastomer is more than 40 parts by weight, the wear resistance of the composition tends to be low.

If the mixing ratio of the metal hydroxide is less than 30 parts by weight, the composition is not sufficiently fire resistant. If the mixing ratio of the metal hydroxide is more than 200 parts by weight, the composition has a low degree of tensile elongation, wear resistance, flexibility and processability.

It is most favourable that 70 to 90 parts by weight of the propylene resin is mixed with 10 to 30 parts by weight of the styrene thermoplastic elastomer modified with the unsaturated carboxylic acid or its derivative and that 50 to 150 parts by weight of the metal hydroxide is added to 100 parts by weight of the mixture of the propylene resin and the modified styrene thermoplastic elastomer. ,

The composition may contain other additives appropriately so long as they do not deteriorate the characteristics of the composition. Typical conventional additives are an antioxidant not containing halogen, a metal-inactivating agent (copper inhibitor and the like), a processing aid (lubricant, wax, and the like), a colorant and a non-flammability assistant (zinc borate, silicon non-flammable assistant).

However as mentioned above, the composition contains no synthetic resin component other than the propylene resin and the modified styrene-based thermoplastic elastomeric resin. Furthermore, the composition should contain no component, other than the metal hydroxide, which reacts with the unsaturated carboxylic acid or derivative thereof of the modified styrene-based resin. It is desired that the modified styrene-based resin bonds directly to the metal hydroxide, to improve the mixing and dispersion of the metal hydroxide particles in the composition.

The properties of the fire resistant composition of the present invention have been described above.

It is mentioned that, because the propylene resin and the modified styrene thermoplastic elastomer are highly compatible with each other, it is possible to form a uniform composition without damaging various characteristics of the modified styrene thermoplastic elastomer.

The composition of the present invention has good processability and moldability because its mechanical characteristic and flexibility balance each other well and it has an appropriate hardness and flexibility.

In the case where the composition contains 70 to 90 parts by weight of the propylene resin mixed with 10 to 30 parts by weight of the styrene thermoplastic elastomer modified with the unsaturated carboxylic acid or its derivative and 50 to 150 parts by weight of the metal hydroxide per 100 parts by weight of the mixture of the propylene resin and the modified styrene thermoplastic elastomer, the composition has improved mechanical characteristics such as wear resistance, tensile strength and tensile elongation and has an excellent balance between these characteristics.

The covered electrical wire obtained by coating the peripheral surface of a conductor with the above-described composition may have the composition applied to the peripheral surface of the conductor concentrically. The conductor may be composed of a plurality of intertwined soft copper wires in accordance with JIS C 3102 or a plurality of soft copper wires intertwined with each other and circularly compressed.

Preferably, the conductor is covered with the composition to a thickness in the range 0.15 to 0.35mm, more preferably 0.2mm to 0.3mm. If the coating thickness is less than 0.2mm, the covered wire may have a reduced wear resistance, but may be satisfactory for some purposes. If the coating thickness is more than 0.3mm, the covered wire may have a reduced flexibility, but may be satisfactory for some purposes.

As necessary, it is possible to interpose one or more layers of a water-resistant resin composition not containing halogen between the fire resistant composition and the conductor.

To obtain the covered wire having superior characteristics, it is appropriate to select an optimum mixing ratio of the components of the fire resistant composition to be applied to the conductor as the coating material, according to the combination of the sectional area of the conductor and the coating thickness of the resin composition.

For example, when the sectional area of the conductor is in the range 0.35mm² to 1.5mm² and the coating thickness is 0.2mm, it is preferable to mix the components of the fire resistant composition at the following ratio: 90 parts by weight of the propylene resin and 10 parts by weight of the modified styrene thermoplastic elastomer, and 70 parts by weight of the metal hydroxide per 100 parts by weight of the mixture of the propylene resin and the modified styrene thermoplastic elastomer.

When the sectional area of the conductor is in the range 0.22mm² to 1.5mm² and the coating thickness is 0.2mm to 0.3mm, it is preferable to mix the components of the fire resistant composition at the following ratio: 80 parts by weight of the propylene resin and 20 parts by weight of the modified styrene thermoplastic elastomer, and 90 parts by weight of the metal hydroxide per 100 parts by weight of the mixture of the propylene resin and the modified styrene thermoplastic elastomer.

When the sectional area of the conductor is more than 1.5mm² and the coating thickness is more than 0.2mm, it is preferable to mix the components of the composition at the following ratio: 60 to 70 parts by weight of the propylene resin and 30 to 40 parts by weight of the modified styrene thermoplastic elastomer, and 70 to 90 parts by weight of the metal hydroxide per 100 parts by weight of the mixture of the propylene resin and the modified styrene thermoplastic elastomer.

When the covered wire is narrow, to obtain a sufficient fire resistance, it is favourable to mix the components of the composition at the following ratio: 65 to 97 parts by weight of the propylene resin and 3 to 35 parts by weight of the modified styrene thermoplastic elastomer, and 100 to 200 parts by weight of the metal hydroxide per 100 parts by weight of the mixture of the propylene resin and the modified styrene thermoplastic elastomer.

In this case, it is more favourable to mix the components of the composition at the following ratio: 70 to 95 parts by weight of the propylene resin and 5 to 30 parts by weight of the modified styrene thermoplastic elastomer, and 120 to 180 parts by weight of the metal hydroxide per 100 parts by weight of the mixture of the propylene resin and the modified styrene thermoplastic elastomer.

When the sectional area of the conductor is 0.13mm² and the coating thickness is 0.2mm, it is preferable to mix the components of the composition at the following ratio: 90 parts by weight of the propylene resin and 10 to 40 parts by weight of the modified styrene thermoplastic elastomer, and 160 parts by weight of the metal hydroxide per 100 parts by weight of the mixture of the propylene resin and the modified styrene thermoplastic elastomer.

The electrical wire of the present invention is highly fire resistant and has good mechanical characteristics, flexibility, and processability. Furthermore, when no curing or cross-linking process is performed in forming the composition, it is unnecessary to use curing or cross-linking equipment in manufacturing the electrical wire. This reduces the number of manufacturing steps. Thus, the manufacturing cost is low.

In the resin composition preferably therefore there is present no cross-linking agent, such as a peroxide, and in the composition as applied as a wire covering there is no cross-linking agent nor decomposition product of a cross-linking agent. However some cross-linking can be performed if desired, e.g. chemically or by irradiation for example by electron beam.

The covered wire of the present invention has good processability. Thus, when the end of the coated electric wire is peeled off from the conductor, a whiskery coating material is not left at a cutting end thereof. Therefore, a crimping terminal is crimped to the conductor, without the whiskery coating material becoming sandwiched between the conductor and the crimping terminal. Thereby it is possible to avoid an unwanted high electrical resistance. That is, the end of the covered wire can be peeled off from the conductor with a high operability.

To provide a covered electrical wire in accordance with the invention having improved resistance to whitening at bending in combination with good flexibility, it is preferred that the electrically insulating covering on the conductor is a composition having a 2% tensile stress of not more than 7 MPa. Preferably the 2% tensile stress is at least 2 MPa. It is also preferred that the 300% tensile stress of one of the polymer components of the composition is not more than 5 MPa, in particular the styrene-based thermoplastic elastomer.

It is preferred that the 2% tensile stress of the polymer composition is 5 to 7 MPa when the coating thickness is in the range 0.2 mm to 0.3 mm. Namely, when the coating is thinner, the tensile stress of the polymer composition is chosen comparatively large, and when the coating is thicker, it may be chosen comparatively small. When the tensile stress of the polymer composition is set thus, the flexibility of the coated electric wire is also secured in case of a comparatively thick coating.

### EXAMPLES

Examples of the present invention will be described in detail below, but are not limitative. In the tables, ratios of components are in parts by weight.

In all of the examples below, the components were continuously mixed and kneaded as follows. The two resin components and the metal hydroxide are fed simultaneously to the input hopper to a twin-shaft extruder having an electrical heating jacket. This extruder was employed to effect the kneading of the components together. The extruder temperature (inner surface) was 200°C at entry rising to 250°C at exit. At the exit end there was an extrusion head for making strands of the mixed composition, held at 260°C. The strands produced pass through a water bath to a pelletizer, to make pellets of the composition. The pellets are used to make a wire covering as described below.

As Examples 1 through 5 of the present invention and Comparison Examples 1 through 5, the following substances were kneaded at the ratios shown in Tables 1 and 2 to prepare resin compositions:-
- P-E Polymer A:: a propylene-ethylene block copolymer of propylene content more than 50% by weight (MFR=0.5g/10 minutes at a density of 0.90, temperature of 230°C, and a load of 2.16kg) - Polypro RB610A (trade name) manufactured by Tokuyama Corporation,
- MAH-SEBS A:: a maleic anhydride-modified hydrogenated styrene-butadiene-styrene copolymer which is a thermoplastic elastomer obtained by hydrogenating the double bonds of a styrene-butadiene block copolymer to saturation and modifying it with maleic anhydride (MFR=5.0g/10 minutes at a density of 0.92, temperature of 230°C, and a load of 2.16kg) - TUFTEC M1913 (trade name) manufactured by Asahi Kasei Corporation,
- SEBS:: a hydrogenated styrene-butadiene-styrene copolymer (MFR=5.0g/10 minutes at a density of 0.91, temperature of 230°C, and a load of 2.16kg) - TUFTEC H041 (trade name) manufactured by Asahi Kasei Corporation,
- magnesium hydroxide A:: magnesium hydroxide (average diameter of particles: 1.0µm, surface-treated with a vinyl silane coupling agent), manufactured by Kyowa Chemicals Co., Ltd.,
- magnesium hydroxide B:: magnesium hydroxide (average diameter of particles: 1.0µm, not surface-treated), manufactured by Kyowa Chemicals Co., Ltd.,
an ageing resister manufactured by Yoshitomi Fine Chemicals, Ltd. (TOMINOX TT (trade name)), a hindered phenol-based antioxidant).

To check the characteristic of each composition, by using an extrusion molding machine, each composition was applied at a thickness of 0.28mm to a conductor (seven soft copper wires twisted together and circularly compressed to give a smooth peripheral surface) having a sectional area of 0.5mm² to prepare an electrical wire. The die nipples used in the extrusion molding were of diameter 1.40mm and 0.88 mm. The extrusion temperature of the die was 210 to 230°C. The extrusion temperature of the cylinder was 200 to 240°C. The linear speed was 50m/minute.

As further Examples 6 through 10 of the invention, components identified above were kneaded at the ratios shown in Table 3 to prepare compositions. The mixing ratios of these compositions were selected to allow them to be preferably used for an electrical wire having a small diameter.

As Comparison Examples 6 through 9, compositions identified were kneaded at the ratios shown in Table 4 to prepare compositions.

To check the characteristic of each of the compositions of Tables 3 and 4, by using an extrusion molding machine, the composition was applied at a thickness of 0.20mm to a conductor (seven soft copper wires intertwined with each other and circularly compressed to give a smooth peripheral surface) having a sectional area of 0.13mm² to prepare the covered wire. The die nipples used in the extrusion molding had diameters of 0.50mm and 0.90 mm. The extrusion temperature of the die was 210 to 230°C. The extrusion temperature of the cylinder was 200 to 240°C. The linear speed was 50m/minute.

The covered electrical wires of the present invention and the comparison examples, were tested to examine fire resistance, wear resistance, tensile strength, tensile elongation, flexibility, and processability, as described below.

### *Fire Resistance

A fire resistance test was conducted in accordance with JASO D611-94 of Japanese Automobile Standards Organisation. In this, the electrical wire was cut to a length of 300mm to make a specimen. Each specimen was put in a test box made of iron and supported horizontally. In this state, using a Bunsen burner having a bore of 10mm, the tip of reducing flame was applied to the underside of the centre of each specimen such that the specimen was burnt for 30 seconds. An after-flame time of each specimen was measured. Specimens which had an after-flame time of less than 15 seconds were regarded as successful. Specimens which had an after-flame time of more than 15 seconds was determined as failures.

### *Wear Resistance

In accordance with JASO D611-94, a wear resistance test was conducted by a blade reciprocation method. The covered electrical wire was cut to a length of 750mm to make a specimen. At a room temperature of 23±5°C, the surface of the coating material of each specimen fixed to a table was worn by axially reciprocating a blade at a rate of 50 times per minute over a length more than 10mm. A load of 7N was applied by the blade. The number of reciprocations, of the blade was measured until the blade contacted the conductor due to the wear of the coating material.

Then, each specimen was moved 100mm and rotated 90 degrees clockwise and the measurement by the above-described method was repeated. The measurement was made three times on the same specimen. In the case of Examples 1 to 5 and the Comparison Examples 1 to 5, specimens for which the blade reciprocated more than 150 times were regarded as successful. In the case of Examples 6 to 10 and the Comparison Examples 6 - 10, specimens for which the blade reciprocated more than 100 times were admitted as successful.

### *Tensile Strength and Tensile Elongation

In accordance with JASO D611-94, tensile strength and tensile elongation tests were conducted. Each covered electrical wire was cut to a length of 150mm to make a specimen. The conductor was removed from the specimen to make a tubular body. Lines were marked on the centre of the specimen at intervals of 50mm. At room temperature of 23±5°C the ends of the specimen were mounted on chucks of a tensile testing machine. Then, the specimen was drawn at a speed of 200m/minute to measure a load and a length between adjacent marked lines when the specimen was cut (broken). Specimens which had a tensile strength of more than 15.7Mpa and a tensile elongation of more than 125% were taken as successful.

### *Flexibility

Specimens which gave a good hand feeling when they were bent by hand were admitted as successful.

### *Processability

A part of the resin composition disposed at the end of each covered wire was peeled off from the conductor to check whether a whisker was formed. Specimens on which no whisker was formed were admitted as successful.

Tables 1 through 4 show the components of each resin composition and the evaluated results for each electrical wire.

**Table 1**

| | E1 | E2 | E3 | E4 | E5 |
|---|---|---|---|---|---|
| P-E polymer A | 60 | 97 | 80 | 90 | 80 |
| MAH-SEBS A | 40 | 3 | 20 | 10 | 20 |
| Magnesium hydroxide A | 70 | 90 | - | - | 90 |
| Magnesium hydroxide B | - | - | 50 | 200 | - |
| Ageing resister | 1 | 1 | 1 | 1 | 1 |
| Total (parts by weight) | 171 | 191 | 151 | 301 | 191 |
| Fire resistance | Pass | Pass | Pass | Pass | Pass |
| Wear resistance (reciprocation number of blade) | 500 | 1800 | 4000 | 300 | 2000 |
| Tensile strength (Mpa) | 28 | 31 | 34 | 23 | 33 |
| Tensile elongation (%) | 200 | 420 | 520 | 160 | 320 |
| Flexibility | Good | Good | Good | Good | Good |
| Processability | Pass | Pass | Pass | Pass | Pass |
| E denotes Example of the present invention. | | | | | |

**Table 2**

| | CE1 | CE2 | CE3 | CE4 | CE5 |
|---|---|---|---|---|---|
| P-E polymer A | 99 | 50 | 70 | 70 | 80 |
| MAH-SEBS A | 1 | 50 | 30 | 30 | - |
| SEBS | - | - | - | - | 20 |
| Magnesium hydroxide A | 70 | - | 20 | - | 90 |
| Magnesium hydroxide B | - | 80 | - | 250 | - |
| Ageing resister | 1 | 1 | 1 | 1 | 1 |
| Total (parts by weight) | 171 | 181 | 121 | 351 | 191 |
| Fire resistance | Pass | Pass | Fail | Pass | Pass |
| Wear resistance (reciprocation number of blade) | 1500 | 90 | 1300 | 75 | 140 |
| Tensile strength (Mpa) | 35 | 20 | 40 | 16 | 37 |
| Tensile elongation (%) | 670 | 110 | 600 | 80 | 710 |
| Flexibility | Bad | Good | Good | Bad | Good |
| Processability | Fail | Pass | Pass | Fail | Pass |
| CE denotes Comparison Example. | | | | | |

**Table 3**

| | E6 | E7 | E8 | E9 | E10 |
|---|---|---|---|---|---|
| P-E polymer A | 95 | 90 | 80 | 65 | 80 |
| MAH-SEBS A | 5 | 10 | 20 | 35 | 20 |
| Magnesium hydroxide B | 120 | 150 | 200 | 160 | 100 |
| Ageing resister | 1 | 1 | 1 | 1 | 1 |
| Total (parts by weight) | 221 | 251 | 301 | 261 | 201 |
| Fire resistance | Pass | Pass | Pass | Pass | Pass |
| Wear resistance (reciprocation number of blade) | Over 500 | Over 500 | Over 500 | 180 | Over 500 |
| Tensile strength (Mpa) | 32 | 30 | 32 | 30 | 29 |
| Tensile elongation (%) | 260 | 220 | 210 | 250 | 265 |
| Flexibility | Good | Good | Good | Good | Good |
| Processability | Pass | Pass | Pass | Pass | Pass |
| E denotes Example of the present invention. | | | | | |

**Table 4**

| | CE6 | CE7 | CE8 | CE9 |
|---|---|---|---|---|
| P-E polymer A | 99 | 55 | 70 | 90 |
| MAH-SEBS A | 1 | 45 | - | 10 |
| SEBS | - | - | 30 | - |
| Magnesium hydroxide B | 160 | 120 | 150 | 220 |
| Ageing resister | 1 | 1 | 1 | 1 |
| Total (parts by weight) | 261 | 221 | 251 | 321 |
| Fire resistance | Pass | Pass | Pass | Pass |
| Wear resistance (reciprocation number of blade) | Over 500 | 60 | 75 | Over 500 |
| Tensile strength (Mpa) | 33 | 30 | 27 | 33 |
| Tensile elongation (%) | 220 | 280 | 320 | 180 |
| Flexibility | Bad | Good | Good | Bad |
| Processability | Fail | Pass | Pass | Fail |
| CE denotes Comparison Example. | | | | |

The evaluated results of the coated electrical wires of the Examples and the Comparison Examples shown in Tables 1 and 2 indicate the following:

The coated wire of each of the Examples 1 to 5 of the present invention was satisfactory in fire resistance, wear resistance, tensile strength, tensile elongation, flexibility and processability. On the other hand, none of the coated wires of the Comparison Examples 1 to 5 satisfied requirements for all of the characteristics.

In particular, the resin composition of each of the Examples 3 and 5 shown in Table 1 had preferable mechanical strength properties such as wear resistance, tensile strength and tensile elongation and a good balance between these characteristics. Each of these compositions contained 70 to 90 parts by weight of the propylene resin and 10 to 30 parts by weight of the styrene thermoplastic elastomer modified with the unsaturated carboxylic acid or its derivative and 50 to 150 parts by weight of the metal hydroxide per 100 parts by weight of the mixture.

As shown in Table 2, in the composition of Comparison Example 1, the mixing ratio of the propylene-ethylene block copolymer was high, and the mixing ratio of the maleic anhydride-modified hydrogenated styrene-butadiene-styrene copolymer was low. Thus, this composition had a low degree of flexibility and processability. In the composition of Comparison Example 2, the mixing ratio of the propylene-ethylene block copolymer was low, and the mixing ratio of the maleic anhydride-modified hydrogenated styrene-butadiene-styrene copolymer was high. Thus, the this composition had a low degree of tensile elongation and wear resistance.

In the composition of Comparison Example 3, the mixing ratio of the magnesium hydroxide was low, so that this composition had poor fire resistance. In the composition of Comparison Example 4, the mixing ratio of the magnesium hydroxide was high so that this composition had insufficient tensile elongation, and was poor in wear resistance, flexibility, and processability.

In the composition of Comparison Example 5, instead of the maleic anhydride-modified hydrogenated styrene-butadiene-styrene copolymer, the unsaturated hydrogenated styrene-butadiene-styrene copolymer was used. Thus, a strong bonding interface was not formed between the metal hydroxide and the hydrogenated styrene-butadiene-styrene copolymer. Consequently this composition had poor wear resistance.

The evaluated results of the coated electrical wires of the Examples and the Comparison Examples shown in Tables 3 and 4 indicate the following:

The wire of each of the Examples 6 to 10 of the present invention was satisfactory in fire resistance, wear resistance, tensile strength, tensile elongation, flexibility and processability. On the other hand, none of the wires of the Comparison Examples 6 to 9 satisfied requirements for all of the characteristics.

As shown in Table 4, in the composition of Comparison Example 6, the mixing ratio of the propylene-ethylene block copolymer was high, and the mixing ratio of the maleic anhydride-modified hydrogenated styrene-butadiene-styrene copolymer was low. Thus, this composition had a low degree of flexibility and processability. In the composition of Comparison Example 7, the mixing ratio of the propylene-ethylene block copolymer was low, and the mixing ratio of the maleic anhydride-modified hydrogenated styrene-butadiene-styrene copolymer was high. Thus, this composition had a low degree of wear resistance.

In the composition of Comparison Example 8, instead of the maleic anhydride-modified hydrogenated styrene-butadiene-styrene copolymer, the unsaturated hydrogenated styrene-butadiene-styrene copolymer was used. Thus, a strong bonding interface was not formed between the metal hydroxide and the hydrogenated styrene-butadiene-styrene copolymer, so that the composition had poor wear resistance.

In the composition of Comparison Example 9, the mixing ratio of the magnesium hydroxide was high so that this composition had poor flexibility and processability.

### Example 11

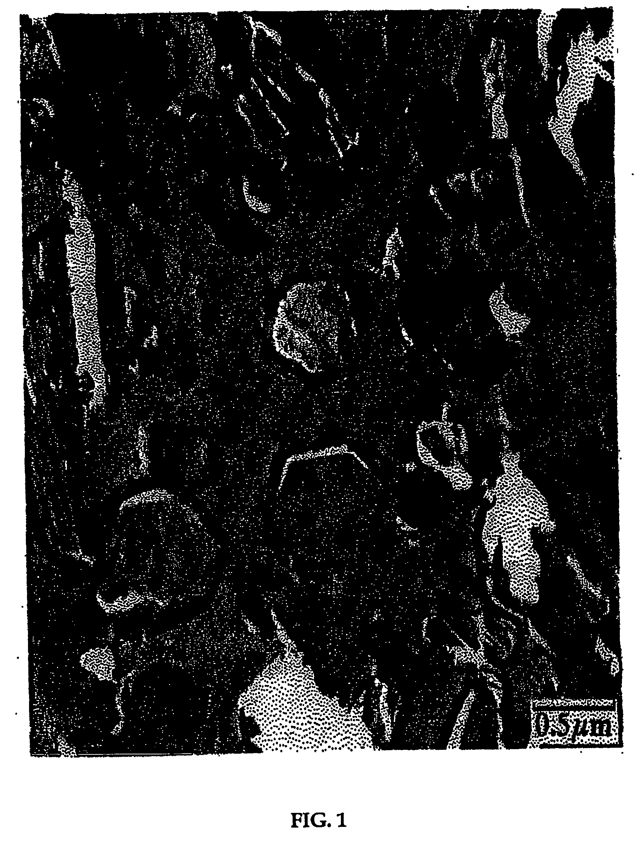

80 parts by weight of P-E polymer A described above, 20 parts by weight of MAH-SEBS A described above and 90 parts by weight of magnesium hydroxide (untreated) were kneaded with a twin-screw extruder at 250°C. A TEM picture of the composition obtained was produced by a transmission electron microscope (TEM) H-800 (HITACHI) at an acceleration voltage of 100KV. The sample was cut to a thickness of about 10µm by a microtome for an electron microscope, and the cut sample was dyed with ruthenic acid (2% aqueous solution) for 2 hours. Then, the dyed sample was buried in an epoxy resin, and TEM was observed by an ultra thin intercept method. The scanning electron micrograph obtained is shown in Fig. 1.

As seen in Fig. 1 the approximately hexagonal particles which are situated at the central part of the picture and the surrounding narrow long particles are the particles of magnesium hydroxide. The dense portion forming a rim around each of these particles is the polymer B which coats the particles, and the material filling the space between the particles is the continuous matrix phase of the polymer A. This shows that the filler particles hardly coagulate, and are finely dispersed in the continuous phase of the polymer A.

This composition provided excellent performance when used as a wire covering.

### Comparative Example 10

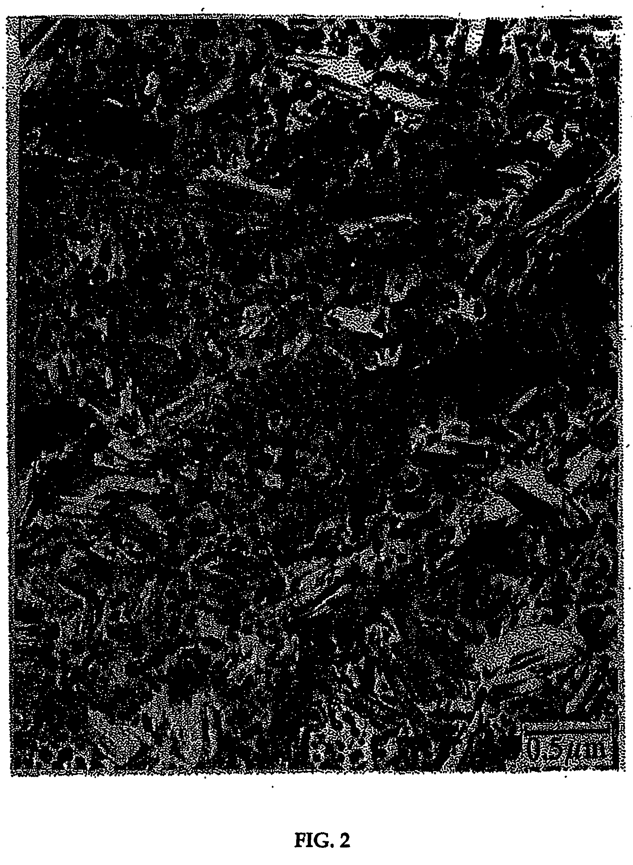

A composition was prepared in like manner as in Example 1 except that SEBS described above (which is not modified with maleic anhydride) was used in place of MAH-SEBS A. A TEM was obtained in the same manner and is shown in Fig. 2.

Comparison of Figs. 1 and 2 show that the styrene-based polymer modified by unsaturated carboxylic acid, by reason of its affinity with the magnesium hydroxide filler particles, forms the structure of the mixture in which it surrounds the particles preferentially. This is advantageous for the properties of the composition as a wire covering.

### Examples 12 to 21 and Comparative Examples 11 and 12

The components shown in Tables 5 and 6 are mixed at the amounts shown (parts by weight) and kneaded by a twin-screw extruder at 250°C. Each resin composition obtained was extrusion-molded at a coating thickness of 0.28mm around a conductor of 0.5mm² section B (wire composed of 7 soft copper wires having a diameter of 0.32mm twisted together and compressed). The die nipples used were of diameter 1.40mm and 0.88mm. The extrusion temperature was 210 to 230°C for the die and 200 to 240°C for the cylinder, and the extrusion molding was carried out at a linear velocity of 50m/min.

The components were as follows:-
- P-E polymer A:: as described above.
- MAH-HSBR:: a hydrogenated styrene-butadiene rubber (DYNARON 1320P (trade name) manufactured by JSR Corporation; density 0.89; Shore A hardness 41; MFR 3.5g/10min (230°C, load of 2.16kg), modified with 1% by weight of maleic anhydride.
- HSBR:: a hydrogenated styrene-butadiene rubber (DYNARON 1320P (trade name) manufactured by JSR Corporation; density 0.89; Shore A hardness 41; MFR 3.5g/10min (230°C, load of 2.16kg).
- MAH-SEPS:: a hydrogenated styrene-isoprene block copolymer (SEPTON 2043 (trade name) manufactured by Kuraray Co., Ltd.; density 0.89; Shore A hardness 38; MFR 4g/10min (230°C, load of 2.16kg), modified with 1% by weight of maleic anhydride.
- SEPS polymer G:: a hydrogenated styrene-isoprene block copolymer (SEPTON 2043 (trade name) manufactured by Kuraray Co., Ltd.; density 0.89; Shore A hardness 38; MFR 4g/10min (230°C, load of 2.16kg).
- Magnesium hydroxides A and B:: as above.
- Ageing resister (antioxidant):: as above.
MAH-HSBR, HSBR, MAH-SEBS and SEPS are thermoplastic elastomeric block copolymers.

The flame resistance, wear resistance and tensile strength/elongation, flexibility and processability were obtained in the same manner as for the Examples above. In the case of wear resistance a number of blade reciprocations of 150 or more is regarded as successful.

**Table 5**

| | E12 | E13 | E14 | E15 | E16 | CE11 |
|---|---|---|---|---|---|---|
| P-E polymer A | 60 | 97 | 80 | 90 | 80 | 80 |
| MAH-HSBR | 40 | 3 | 20 | 10 | 20 | - |
| HSBR | - | - | - | - | - | 20 |
| Mg(OH)₂ A | 70 | 90 | - | - | 90 | 80 |
| Mg(OH)₂ B | - | - | 30 | 200 | - | - |
| Antioxidant | 1 | 1 | 1 | 1 | 1 | 1 |
| Total | 171 | 191 | 131 | 301 | 191 | 191 |
| Tensile elongation (%) | 300 | >500 | >500 | 170 | >500 | >500 |
| Tensile strength (MPa) | 27 | 30 | 31 | 24 | 30 | 34 |
| Fire resistance | Pass | Pass | Pass | Pass | Pass | Pass |
| Wear resistance (blade reciprocation number) | 400 | 1500 | 2500 | 260 | 1800 | 110 |
| Flexibility | Good | Good | Good | Good | Good | Bad |
| Processability | Pass | Pass | Pass | Pass | Pass | Fail |

**Table 6**

| | E17 | E18 | E19 | E20 | E21 | CE12 |
|---|---|---|---|---|---|---|
| P-E polymer A | 60 | 97 | 80 | 90 | 80 | 80 |
| MAH-SEPS | 40 | 3 | 20 | 10 | 20 | - |
| SEPS | - | - | - | - | - | 20 |
| Mg(OH)₂ A | 70 | 90 | - | - | 90 | 80 |
| Mg(OH)₂ B | - | - | 30 | 200 | - | - |
| Antioxidant | 1 | 1 | 1 | 1 | 1 | 1 |
| Total | 171 | 191 | 131 | 301 | 191 | 191 |
| Tensile elongation (%) | 250 | >500 | >500 | 170 | >500 | 700 |
| Tensile strength (MPa) | 25 | 28 | 26 | 27 | 28 | 27 |
| Fire resistance | Pass | Pass | Pass | Pass | Pass | Pass |
| Wear resistance (blade reciprocation number) | 400 | 1300 | 1200 | 260 | 1700 | 90 |
| Flexibility | Good | Good | Good | Good | Good | Good |
| Processability | Pass | Pass | Pass | Pass | Pass | Pass |

### Example 22 and Comparative Examples 13 and 14

Polymer components magnesium hydroxide and an antioxidant in ratios shown in Table 7 were kneaded by a twin-screw extruder at 250°C. The composition obtained was extrusion-molded at a coating thickness of 0.28 mm around a conductor of sectional area of 0.5 mm² (7/SB: twisted wire which is composed of seven soft copper wires having a diameter of 0.30 mm). The die nipples used had diameters of 1.40 mm and 0.88 mm, in the extrusion molding. The extrusion temperature was 240 to 250°C for the die and 230 to 250°C for the cylinder, and the extrusion molding was carried out at a linear velocity of 50m/min.

The components used were:-
- MAH-SEBS A:: as above (its 300% tensile stress is 4.4 MPa)
- MAH-SEBS B:: TUFTEC M1943 (trade name) manufactured by Asahi Kasei Corporation, a styrene-based thermoplastic elastomer obtained by hydrogenating the double bonds of a styrene- butadiene block copolymer to saturation and modifying it with maleic anhydride. 300% Tensile stress = 2.9 MPa: density = 0.90; MFR 8g/10min (230°C, a load of 2.16kg).
- SBS epoxy:: EPOFRIEND A1005 (trade name) manufactured by Daicel Chemical Co., Ltd., a styrene-butadiene-styrene copolymer containing epoxy groups. 300% Tensile stress = 5.2 MPa. Density = 0.96; MFR 4g/10min (190°C, load of 2.16kg).
- P-E polymer A:: as above.
- HDPE:: HIZEX 5305E manufactured by Mitsui Petrochemical Co., Ltd., a high density polyethylene. Density = 0.95; MFR 3.0g/10min (190°C, load of 2.16kg).

To test for whitening, the coated electrical wire obtained was would spirally on a cylindrical mandrel of 6 mm diameter, and was visually evaluated whether the coating is whitened or not.

In these examples the flexibility of the coated electrical wire was evaluated as follows:-

An article which was obtained by bundling 30 pieces of the coated electric wire having a length of 350 mm and roughly winding the bundle with a vinyl tape is made as a sample. The sample is mounted on a pair of cylinders (each having a diameter of 19 mm) which are arranged mutually parallel and spaced horizontally which a gap of 100 mm, with the sample perpendicular to the axes of the cylinder so that the centre of the sample is situated at the centre of the gap between the cylinders. The sample is slowly pulled downward at the centre between the cylinders at room temperature, and the maximum load until the sample is removed from the cylinders is measured. In the test, a "pass" is recorded if the maximum load is 70N or less in case of the coating thickness of 0.20 mm and 50N or less in case of the coating thickness of 0.28 mm.

Results are shown in Table 7, which also gives the 2% tensile stress of the coating composition.

**Table 7**

| | E22 | CE 13 | CE 14 |
|---|---|---|---|
| MAH-SEBS A | 20 | - | - |
| MAH-SEBS B | - | - | 10 |
| SEBS epoxy | - | 5 | - |
| P-E Polymer A | 80 | 95 | - |
| HDPE | - | - | 90 |
| Magnesium hydroxide | 100 | 100 | 100 |
| Antioxidant | 1 | 1 | 1 |
| 2% Tensile stress (MPa) | 5.8 | 7 | 9 |
| Whitening on bending | No | Yes | Yes |
| Flexibility | Pass | Reject | Reject |

### Example 23 and Comparative Examples 15 and 16

Components in ratios given in Table 8 were kneaded by a twin-screw extruder at 250°C. The composition obtained was extrusion-molded at a coating thickness of 0.20 mm or 0.28 mm as stated in the Table around a conductor of sectional area of 0.5 mm² (7/SB: twisted wire which is composed of seven soft copper wires having a diameter of 0.30 mm). Die nipples in extrusion molding were of diameter 1.25 mm and 0.88 mm in case of the coating thickness of 0.20 mm and of diameter 1.40 mm and 0.88 mm in case of the coating thickness of 0.28 mm. The extrusion temperature was 240 to 250°C for the die and 230 to 240°C for the cylinder, and the extrusion molding was carried out at a linear velocity of 50m/min.

The polymers used were:-
P-E polymer A, HDPE and MAH-SEBS A: as described above.
MAH-EPR: T7741P manufactured by JSR Corporation; density = 0.86; MFR 0.9g/10min (230°C, load of 2.16kg).

Flexibility and whitening were assessed as in Example 22. The results are shown in Table 8.

**Table 8**

| | E23 | CE15 | CE16 |
|---|---|---|---|
| P-E Polymer A | 90 | 98 | - |
| HDPE | - | - | 90 |
| MAH-SEBS A | 10 | 2 | - |
| MAH-EPR | - | - | 10 |
| Magnesium hydroxide | 80 | 100 | 100 |
| Antioxidant | 1 | 1 | 1 |
| Coating thickness (mm) | 0.20 | 0.20 | 0.28 |
| 2% Tensile stress (MPa) | 7.0 | 9.0 | 7.3 |
| Flexibility | Pass | Reject | Reject |
| Whitening on bending | No | Yes | Yes |

### Examples 24 to 33

Further examples of the present invention will now be described.

As Examples 24 to 28 of the present invention, components as described above were kneaded at the ratios shown in Table 9 to prepare resin compositions.

To check the characteristics of each composition, by using an extrusion molding machine, each composition was applied at a thickness of 0.28 mm to a conductor (seven soft copper wires twisted together and circularly compressed to give a smooth peripheral surface) having a sectional area of 0.5 mm² to prepare an electrical wire. The die nipples used in the extrusion molding were of diameter 1.40mm and 0.88 mm. The extrusion temperature of the die was 210 to 230°C. The extrusion temperature of the cylinder was 200 to 240°C. The linear speed was 50m/minute.

As further Examples 29 to 33 of the invention, components as described above were kneaded at the ratios shown in Table 10 to prepare polymer compositions. The mixing ratio of these compositions were selected to allow them to be preferably used for an electrical wire having a small diameter.

To check the characteristics of each of the compositions of Table 10, by using an extrusion molding machine, the composition was applied at a thickness of 0.20mm to a conductor (seven soft copper wires twisted together and circularly compressed to give a smooth peripheral surface) having a sectional area of 0.13 mm² to prepare the covered wire. The die nipples used in the extrusion molding had diameters of 0.50 mm and 0.90 mm. The extrusion temperature of the die was 210 to 230°C. The extrusion temperature of the cylinder was 200 to 240°C. The linear speed was 50m/minute.

The covered electrical wires of Examples 24 to 33 were tested to examine fire resistance, wear resistance, tensile strength, tensile elongation, flexibility, and processability, by the test procedures given above for Examples 1 to 10. In the wear resistance test for Examples 24 to 28, specimens for which the blade reciprocated more than 150 times were regarded as successful. For Examples 29 to 33, specimens for which the blade reciprocated more than 100 times were admitted as successful.

Tables 9 and 10 show the components of each resin composition and the evaluated results for each electrical wire.

**Table 9**

| | E24 | E25 | E26 | E27 | E28 |
|---|---|---|---|---|---|
| P-E Polymer A | 60 | 97 | 80 | 90 | 80 |
| MAH-SEBS A | 40 | 3 | 20 | 10 | 20 |
| Magnesium hydroxide A | 70 | 90 | - | - | 90 |
| Magnesium hydroxide B | - | - | 50 | 200 | - |
| Ageing resister | 1 | 1 | 1 | 1 | 1 |
| Total (parts by weight) | 171 | 191 | 151 | 301 | 191 |
| Fire resistance | Pass | Pass | Pass | Pass | Pass |
| Wear resistance (reciprocation number of blade) | 500 | 1800 | 4000 | 300 | 2000 |
| Tensile strength (MPa) | 28 | 31 | 34 | 23 | 33 |
| Tensile elongation (%) | 200 | 420 | 520 | 160 | 320 |
| 2% tensile stress | 5.0 | 7.0 | 5.8 | 6.8 | 5.4 |
| Flexibility | Good | Good | Good | Good | Good |
| Processability | Pass | Pass | Pass | Pass | Pass |

**Table 10**

| | E29 | E30 | E31 | E32 | E33 |
|---|---|---|---|---|---|
| P-E Polymer A | 95 | 90 | 80 | 65 | 80 |
| MAH-SEBS A | 5 | 10 | 20 | 35 | 20 |
| Magnesium hydroxide B | 120 | 150 | 200 | 160 | 100 |
| Ageing resister | 1 | 1 | 1 | 1 | 1 |
| Total (parts by weight) | 221 | 251 | 301 | 261 | 201 |
| Fire resistance | Pass | Pass | Pass | Pass | Pass |
| Wear resistance (reciprocation number of blade) | Over 500 | Over 500 | Over 500 | 180 | Over 500 |
| Tensile strength (MPa) | 32 | 30 | 32 | 30 | 29 |
| 2% tensile stress | 5.0 | 5.0 | 4.8 | 3.2 | 4.0 |
| Tensile elongation (%) | 260 | 220 | 210 | 250 | 265 |
| Flexibility | Good | Good | Good | Good | Good |
| Processability | Pass | Pass | Pass | Pass | Pass |

The coated wire of each of the Examples 24 to 33 of the present invention was thus satisfactory in fire resistance, wear resistance, tensile strength, tensile elongation, flexibility and processability. In particular, the resin composition of each of the Examples 26 and 28 shown in Table 9 had preferable mechanical strength properties such as wear resistance, tensile strength and tensile elongation and a good balance between these characteristics. Each of these compositions contained 70 to 90 parts by weight of the propylene resin and 10 to 30 parts by weight of the styrene thermoplastic elastomer modified with the unsaturated carboxylic acid or its derivative and 50 to 150 parts by weight of the metal hydroxide per 100 parts by weight of the mixture.

In summary, by employing a composition of 2% tensile stress not more than 7 MPa an electrical wire which can avoid whitening on bending even when a filler is present and has good flexibility can be obtained.

The present invention is not limited to the above-described embodiments. It is possible to make various modifications within the general scope of the present invention. For example, although the age resister was used as an additive in the embodiment, the following conventional additives may be appropriately used: an antioxidant not containing halogen, a metal-inactivating agent (copper inhibitor or the like), a processing aid (lubricant, wax, and the like), a colorant, a non-flammability assistant (zinc borate, silicon non-flammability assistant).

As described above, the resin composition of the invention has excellent fire resistance without generating the halogen gas when burned and not only has good mechanical characteristics including wear resistance, tensile strength, tensile elongation and the like, but also good flexibility and processability. It is possible to obtain a superior coated electrical wire by coating a conductor with this composition.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A fire resistant resin composition containing the synthetic resin components:
(a) 60 to 97 parts by weight of a propylene resin containing propylene as its main monomer component by weight, and
(b) 3 to 40 parts by weight of a styrene-based thermoplastic elastomeric resin modified with an unsaturated carboxylic acid or a derivative thereof, components (a) and (b) being free of halogen and the total amount of components (a) and (b) being 100 parts by weight and there being no other synthetic resin components included in the composition,
the composition further containing:
(c) 30 to 200 parts by weight of fire resistant metal hydroxide per 100 parts by weight of components (a) and (b).

2. A fire resistant resin composition according to claim 1, wherein component (b) is a styrene-based thermoplastic elastomeric resin modified with maleic anhydride, and said metal hydroxide is magnesium hydroxide.

3. A fire resistant resin composition according to claim 1 or 2, wherein component (a) has a melt flow rate in the range 0.1 to 5 g/10 minutes, measured at a temperature of 230°C and a load of 2.16 kg in accordance with JIS K 6758.

4. A fire resistant resin composition according to any one of claims 1 to 3, wherein component (b) is a block copolymer having hard segments formed of a monomer selected from styrene and styrene derivatives and soft segments having elasticity at ambient temperature.

5. A fire resistant resin composition according to any one of claims 1 to 4, having a 2% tensile stress of not more than 7 MPa.

6. A fire resistant resin composition according to claim 5, wherein component (b) has a 300% tensile stress of not more than 5 MPa.

7. An electrical wire having an electrical conductor and a covering on the electrical conductor, said covering being a resin composition according to any one of claims 1 to 6.

8. An electrical wire according to claim 7, wherein said covering has a thickness in the range 0.2 to 0.3mm.

9. An electrical wire according to claim 7, wherein one of the following applies:
(a) said covering has a thickness not more than 0.2 mm and the 2% tensile stress of said resin composition is in the range 5 to 7 MPa, and
(b) said covering has a thickness in the range 0.2 mm to 0.3 mm and the 2% tensile stress of said resin composition is in the range 2 to 6 MPa.

10. A method of making a fire resistant resin composition according to any one of claims 1 to 6, comprising mixing together said components (a), (b) and (c).

11. A method according to claim 10, wherein there is no cross-linking of the synthetic resin components.

## Patentansprüche

1. Flammhemmende Harzzusammensetzung, enthaltend die synthetischen Harzkomponenten:
(a) 60 bis 97 Gew.-Teile eines Propylenharzes, enthaltend Propylen als dessen Hauptmonomerkomponente, bezogen auf das Gewicht, und
(b) 30 bis 40 Gew.-Teile eines thermoplastischen elastomeren Harzes auf Styrol-Basis, modifiziert mit einer ungesättigten Carbonsäure oder einem Derivat davon, wobei die Komponenten (a) und (b) frei von Halogen sind, und die Gesamtmenge der Komponenten (a) und (b) 100 Gew.-Teile beträgt, und keine anderen synthetischen Harzkomponenten in der Zusammensetzung eingeschlossen sind,
wobei die Zusammensetzung weiter enthält:
(c) 30 bis 200 Gew.-Teile eines flammhemmenden Metallhydroxids pro 100 Gew.-Teile der Komponenten (a) und (b).

2. Flammhemmende Harzzusammensetzung gemäß Anspruch 1, wobei die Komponente (b) ein thermoplastisches elastomeres Harz auf Styrol-Basis, modifiziert mit Maleinsäureanhydrid, ist und das Metallhydroxid Magnesiumhydroxid ist.

3. Flammhemmende Harzzusammensetzung gemäß Anspruch 1 oder 2, wobei die Komponente (a) eine Schmelzflußrate in dem Bereich von 0,1 bis 5 g/10 Minuten, gemessen bei einer Temperatur von 230°C und einer Belastung von 2,16 kg gemäß JIS K 6758 aufweist.

4. Flammhemmende Harzzusammensetzung gemäß einem der Ansprüche 1 bis 3, wobei die Komponente (b) ein Blockcopolymer mit harten Segmenten, gebildet aus einem Monomer, ausgewählt aus Styrol und Styrolderivaten, und weichen Segmenten mit Elastizität bei Raumtemperatur ist.

5. Flammhemmende Harzzusammensetzung gemäß einem der Ansprüche 1 bis 4, welche eine 2%-Zugspannung von nicht mehr als 7 MPa aufweist.

6. Flammhemmende Harzzusammensetzung gemäß Anspruch 5, wobei die Komponente (b) eine 300%-Zugspannung von nicht mehr als 5 MPa aufweist.

7. Elektrischer Draht mit einem elektrischen Leiter und einer Ummantelung um den elektrischen Leiter, wobei die Ummantelung eine Harzzusammensetzung gemäß einem der Ansprüche 1 bis 6 ist.

8. Elektrischer Draht gemäß Anspruch 7, wobei die Ummantelung eine Dicke in dem Bereich von 0,2 bis 0,3 mm aufweist.

9. Elektrischer Draht gemäß Anspruch 7, wobei eines der folgenden gilt:
(a) die Ummantelung weist eine Dicke von nicht mehr als 0,2 mm auf und die 2%-Zugspannung der Harzzusammensetzung liegt in dem Bereich von 5 bis 7 MPa, und
(b) die Ummantelung weist eine Dicke in dem Bereich von 0,2 mm bis 0,3 mm auf und die 2%-Zugspannung der Harzzusammensetzung liegt in dem Bereich von 2 bis 6 Mpa.

10. Verfahren zur Herstellung einer flammhemmenden Harzzusammensetzung gemäß einem der Ansprüche 1 bis 6, umfassend das Miteinandermischen der Komponenten (a), (b) und (c).

11. Verfahren nach Anspruch 10, wobei es kein Vernetzen der synthetischen Harzkomponenten gibt.

## Revendications

1. Composition de résine résistant au feu contenant les composants de résine synthétique :
(a) 60 à 97 parties en poids d'une résine de propylène contenant du propylène en tant que composant monomère principal en poids, et
(b) 3 à 40 parties en poids d'une résine élastomère thermoplastique à base de styrène modifiée par un acide carboxylique insaturé ou un dérivé de ce dernier, les composants (a) et (b) étant exempts d'halogènes, et la quantité totale des composants (a) et (b) étant de 100 parties en poids, la composition ne contenant aucun autre composant de résine synthétique,
la composition contenant en outre :
(c) 30 à 200 parties en poids d'un hydroxyde métallique résistant au feu pour 100 parties en poids des composants (a) et (b).

2. Composition de résine résistant au feu selon la revendication 1, dans laquelle le composant (b) est une résine élastomère thermoplastique à base de styrène modifiée par de l'anhydride maléique, et ledit hydroxyde métallique est l'hydroxyde de magnésium.

3. Composition de résine résistant au feu selon la revendication 1 ou 2, dans laquelle le composant (a) a un taux d'indice de fluidité compris dans la plage de 0,1 à 5 g/10 minutes, mesuré à une température de 230°C sous une charge de 2,16 kg selon JIS K 6758.

4. Composition de résine résistant au feu selon l'une quelconque des revendications 1 à 3, dans laquelle le composant (b) est un copolymère bloc ayant des segments durs formés d'un monomère choisi parmi le styrène et les dérivés du styrène, et des segments mous ayant une certaine élasticité à la température ambiante.

5. Composition de résine résistant au feu selon l'une quelconque des revendications 1 à 4, qui présente une contrainte de traction à 2 % non supérieure à 7 MPa.

6. Composition de résine résistant au feu selon la revendication 5, dans laquelle le composant (b) présente une contrainte de traction à 300 % non supérieure à 5 MPa.

7. Fil électrique ayant un conducteur électrique et une enveloppe sur le conducteur électrique, ladite enveloppe étant en une composition de résine selon l'une quelconque des revendications 1 à 6.

8. Fil électrique selon la revendication 7, dans lequel ladite enveloppe a une épaisseur comprise dans la plage de 0,2 à 0,3 mm.

9. Fil électrique selon la revendication 7, dans lequel :
(a) ou bien ladite enveloppe a une épaisseur non supérieure à 0,2 mm, et la contrainte de traction à 2 % de ladite composition de résine est comprise dans la plage de 5 à 7 MPa,
(b) ou bien ladite enveloppe a une épaisseur comprise dans la plage de 0,2 à 0,3 mm, et la contrainte de traction à 2 % de ladite composition de résine est comprise dans la plage de 2 à 6 MPa.

10. Procédé de fabrication d'une composition de résine résistant au feu selon l'une quelconque des revendications 1 à 6, qui consiste à mélanger les uns avec les autres lesdits composants (a), (b) et (c).

11. Procédé selon la revendication 10, dans lequel il n'y a pas de réticulation des composants de résine synthétique.
